# EUROPEAN PATENT APPLICATION

(11) **EP 2 055 519 A1**
(43) Date of publication of application: **06.05.2009**
(21) Application number: 07119894.9
(22) Date of filing: 02.11.2007
(51) Int. Cl.: B60K 6/10, B60K 6/30, B60K 6/48, F16D 37/02

(54) **A vehicle and a method of controlling the vehicle**

(71) Applicant: Gomecsys B.V., 1411 AR Naarden (NL)
(72) Inventor: Gooijer de, Lambertus, Hendrik, 1412 ND, NAARDEN (NL)
(74) Representative: Metman, Karel Johannes

(57) **Abstract**

A vehicle comprises a prime mover for driving at least a wheel of the vehicle, a flywheel (6) for storage of kinetic energy upon decelerating the vehicle, a slipping mechanism (7) which is provided with a slipping clutch (8) drivably coupled to the wheel via a clutch transmission (9) and engageable to the flywheel (6), and a control member for controlling the slipping mechanism (7). The slipping mechanism (7) is adapted such that the transmission ratio between the flywheel (6) and the wheel is determined by the extent of slip between the flywheel (6) and the slipping clutch (8) and at least one fixed transmission ratio between the slipping clutch (8) and the wheel.

## Description

The present invention relates to a vehicle which comprises a prime mover for driving at least a wheel of the vehicle, a flywheel for storage of kinetic energy upon decelerating the vehicle, a slipping mechanism which is provided with a slipping clutch drivably coupled to the wheel via a clutch transmission and engageable to the flywheel, and a control member for controlling the slipping mechanism.

Such a vehicle is known from EP 0 043 909. The known vehicle comprises a driving system including a flywheel which is accelerated during deceleration of the vehicle. During a subsequent acceleration of the vehicle the kinetic energy stored in the rotating flywheel is used to drive the wheels of the vehicle. A disadvantage of the known vehicle is that the driving system is rather complex and has a large volume.

The object of the invention is to provide a vehicle which is provided with a simple driving system including a flywheel for energy storage.

The object is achieved by the vehicle according to the invention, wherein the slipping mechanism is adapted such that the transmission ratio between the flywheel and the wheel is determined by the extent of slip between the flywheel and the slipping clutch and at least one fixed transmission ratio between the slipping clutch and the wheel.

These features provide the opportunity to accelerate the flywheel during a period of slip during vehicle deceleration. In state of the art vehicles slipping conditions are avoided as much as possible, and acceleration of the flywheel is mainly achieved by means of a continuously variable transmission after having coupled the wheels to the flywheel during a short period of slip. A continuously variable transmission, however, is a relatively complex and expensive mechanism. Therefore, the vehicle according to the invention including at least one fixed transmission ratio between the slipping clutch and the wheel provides a simpler, less expensive and smaller driving system. Instead of two or more fixed transmission ratios it is also possible to apply only one fixed transmission ratio between the wheel and the slipping clutch. This is a simple and compact embodiment.

The flywheel may be disposed concentrically with respect to a primary shaft which is driven by the prime mover, wherein the primary shaft is connected to an input shaft of a gearbox of the vehicle. This embodiment provides a compact configuration of positioning the flywheel with respect to the primary shaft.

The clutch transmission may comprise a first clutch gear which is fixed to the slipping clutch and which meshes with a second clutch gear, wherein the second clutch gear is fixed to a secondary shaft being an output shaft of the gearbox and drivably coupled to the wheel. This appears to be a reliable and robust transmission means.

The clutch transmission is adapted such that a high speed of the flywheel can be achieved, for example 20,000 - 30,000 rpm. Therefore, the diameter of the first clutch gear will be significantly smaller than that of the second clutch gear. It might be possible to integrate the clutch transmission and the first transmission gear of a conventional gearbox, for example. In that case the first transmission gear should be disengaged from the primary shaft or the input shaft of the gearbox so as to avoid that the wheel drives the primary shaft (and the engine) instead of the flywheel.

In an alternative embodiment the flywheel is rotatably mounted on the primary shaft. In that case the primary shaft functions as a supporting means for the flywheel.

Preferably, the slipping mechanism comprises a second slipping clutch which is drivably coupled to the wheel via a second clutch transmission and which is engageable to the flywheel so as to drive the wheel during a period of slip between the flywheel and the second slipping clutch during a vehicle acceleration when the flywheel rotates, because the kinetic energy stored in the flywheel during a vehicle deceleration can be directly used for driving the vehicle via slip between the flywheel and the second slipping clutch.

The second slipping clutch may be drivably coupled to the primary shaft and the second clutch transmission may be formed by the gearbox and a further transmission between the output shaft of the gearbox and the wheel. In that case no separate transmission means are necessary, but the vehicle may use the normally available primary shaft and gearbox of the vehicle.

Preferably, the slipping clutch and the second slipping clutch are disposed at opposite sides of the flywheel, and the flywheel, the slipping clutch, the second slipping clutch and the clutch transmission are disposed between the prime mover and the gear box as seen along the primary shaft. This embodiment is compact and relatively simple and provides the opportunity to implement the flywheel and slipping mechanism in an existing vehicle driveline without major design modifications.

The slipping clutch and/or the second slipping clutch may be dry slipping clutches, or magnetic powder clutches. The latter have the advantage that no external moving means are necessary to engage the flywheel and the slipping clutches to each other, as the engagement is effected by a powder which is actuated by magnetic forces.

The flywheel may form a rotor of an electrical generator, and a power controller may be present for controlling the generator such that the flywheel can be accelerated during a vehicle deceleration at least once the slip between the flywheel and the slipping clutch is negligible. This provides the opportunity to brake the vehicle effectively without the necessity of applying a continuously variable transmission. In practice, the generator will brake the vehicle after the flywheel has been accelerated to a certain speed through slip between the flywheel and the slipping clutch.

The invention also relates to a vehicle comprising a prime mover for driving at least a wheel of the vehicle, a flywheel for storage of kinetic energy, wherein the flywheel forms a rotor of an electric motor, an electrical generator drivably coupled to the wheel and/or the prime mover, and a control member for controlling the electrical generator and the electric motor such that electrical power generated by the electrical generator is transmitted to the electric motor associated with the flywheel to accelerate the flywheel. This provides the opportunity to accelerate the flywheel without slip and also to accelerate the flywheel by the prime mover when the vehicle does not decelerate, for example during engine idling. In this case it is not necessary to direct the electrical power generated by the generator to a battery or the like, but the electrical power can be converted to kinetic energy in the flywheel. This energy can be transmitted to the wheels of a vehicle by slip, for example through one of the embodiments as described hereinbefore.

Alternatively, the electric motor associated with the flywheel is switchable to function as a second generator and the electric generator associated with the wheel and/or the prime mover is switchable to function as a second electric motor so as to be able to drive the second electric motor by electric power from the second generator. In this embodiment the flywheel is accelerated and decelerated without any slip. The embodiment is typically suitable for vehicles including an internal combustion with an integrated electric motor/generator. Normally, the electric power generated by the integrated motor/generator, for example during a vehicle deceleration, is transmitted to a battery. However, in this case the electric power is transmitted to the electric motor associated with the flywheel, such that the electric power is stored as kinetic energy. The kinetic energy can be converted to electrical power for driving the integrated motor/generator by switching the electric motor associated with the flywheel to a second generator and switching the integrated electric motor/generator to electric motor functioning, for example during a vehicle acceleration. This means that the flywheel functions as an energy storage system for storing vehicle deceleration energy to be used for vehicle acceleration energy without a slipping flywheel.

The invention also relates to a method of controlling a vehicle comprising a prime mover for driving at least a wheel of the vehicle, a flywheel for storage of kinetic energy upon decelerating the vehicle, a slipping mechanism which is provided with a slipping clutch which is drivably coupled to the wheel, wherein during at least a part of a vehicle deceleration the slipping clutch and the flywheel are engaged to each other such that the wheel is braked by accelerating the flywheel through slip between the slipping clutch and the flywheel, whereas the slipping clutch and the flywheel are disengaged at least when the flywheel has reached substantially the same speed as the slipping clutch. Thus, the vehicle is decelerated by transmitting kinetic energy to the flywheel through slip between the flywheel and the slipping clutch. This appears to provide a simple and reliable method since known methods try to minimize slip and accelerate the flywheel by changing the transmission ratio between the slipping clutch and the wheel continuously during the period of vehicle deceleration.

The slipping mechanism may comprise a second slipping clutch which is drivably coupled to the wheel, and the second slipping clutch and the flywheel may be engaged to each other such that the flywheel, when rotating, is decelerated through slip between the second slipping clutch and the flywheel, hence driving the wheel for vehicle acceleration.

It is advantageous to disengage the flywheel and the second slipping clutch when the second slipping clutch has reached substantially the same speed as the flywheel, because at increased speed the prime mover only has to drive the wheel of the vehicle without driving the flywheel.

The invention will hereafter be elucidated with reference to the schematic drawings illustrating an embodiment of the invention by way of example.

Fig. 1 is a perspective sectional view of an embodiment of a part of a vehicle according to the invention.

Fig. 2 is a side view of the embodiment of Fig. 1.

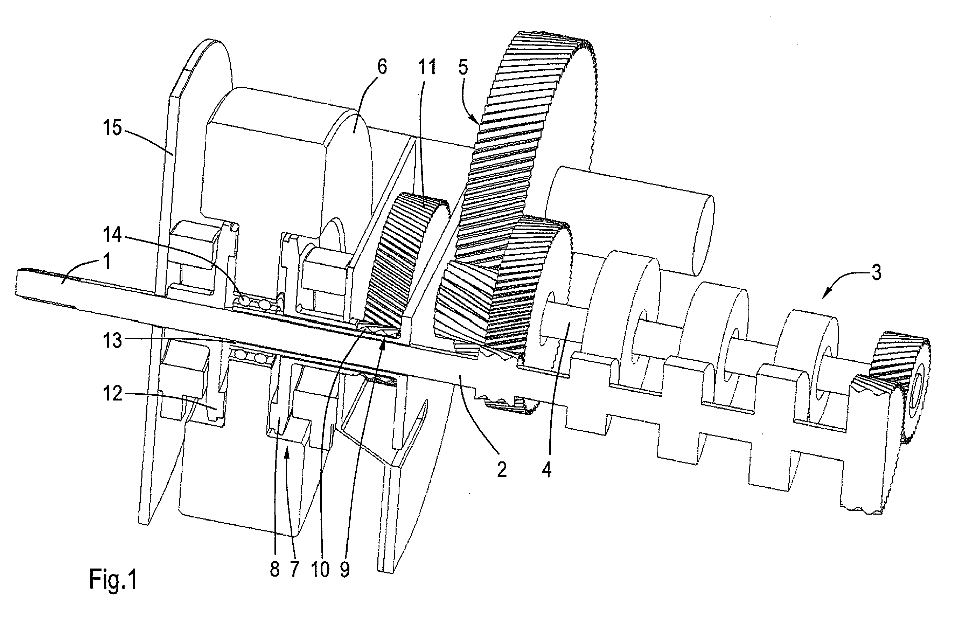

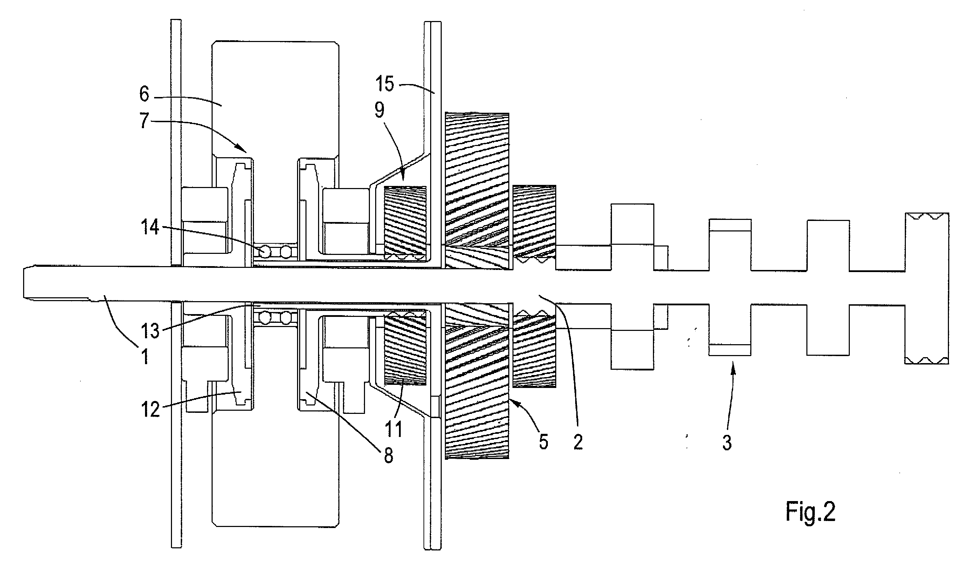

Fig. 1 and 2 show an embodiment of a part of a driveline of a vehicle according to the invention. The vehicle comprises a prime mover for driving at least a wheel of the vehicle (the prime mover and the wheel are not shown in Fig. 1 and 2). Of course, in practice more than one wheel of the vehicle may be driven by the prime mover. The prime mover may be an internal combustion engine, but another type, such as an electric motor, is also conceivable. The prime mover is drivably connected to a primary shaft 1 via a known clutch mechanism (not shown). In this embodiment the primary shaft 1 forms an input shaft 2 of a manual gearbox 3. The gearbox 3 as shown in Fig. 1 and 2 is a conventional gearbox and is not depicted in full detail. The gearbox 3 includes an output shaft 4 which is coupled to the wheels of the vehicle via a further transmission 5. The further transmission 5 may include a differential gear mechanism as is well-known in vehicles. The input and output shafts 2, 4 of the gearbox 3 extend parallel to each other.

The embodiment is provided with a flywheel 6 for storage of kinetic energy upon decelerating the vehicle. This is achieved by a slipping mechanism 7 including a slipping clutch 8 which is drivably coupled to the wheel via a clutch transmission 9 and which is engageable to the flywheel 6. The slipping mechanism 7 is adapted such that the transmission ratio between the flywheel 6 and the wheel is determined by the extent of slip between the flywheel 6 and the slipping clutch 8 and at least one fixed transmission ratio between the slipping clutch 8 and the wheel. The slipping clutch 8 is in the form of a clutch disc in this embodiment, but another configuration of a slipping clutch 8 is conceivable, such as brake blocks comparable to passenger car brakes. Due to slip between the flywheel 6 and the slipping clutch 8 the transmission ratio between the flywheel 6 and the slipping clutch 8 is variable. However, the transmission ratio between the slipping clutch 8 and the wheel is fixed, in this case there is only one fixed transmission ratio. This is more simple and compact and less expensive than applying a continuously variable transmission, for example.

The fixed transmission ratio is achieved by the clutch transmission 9, which comprises a first clutch gear 10 which is fixed to the slipping clutch 8 and which meshes with a second clutch gear 11. The second clutch gear 11 is fixed to a secondary shaft. In this case the secondary shaft is the output shaft 4 of the gearbox such that the slipping clutch 8 is drivably coupled to the wheel. This means that during a vehicle deceleration the vehicle wheels may be coupled to the prime mover through the gearbox 3 and the primary shaft 1, whereas the wheels may also be coupled to the flywheel 6 through the clutch transmission 9.

When the vehicle brakes, the slipping clutch 8 can be pressed against the flywheel 6, such that the flywheel 6 is accelerated during at least a part of the vehicle deceleration. After some time of slipping the speed of the vehicle wheel, and thus the speed of the slipping clutch 8 will be reduced and the speed of the flywheel 6 will be increased such that both speeds may be substantially the same. At that moment the slipping clutch 8 and the flywheel 6 are preferably disengaged so as to avoid driving the wheel by the flywheel 6, since this would lead to a subsequent slower deceleration.

The material of the slipping clutch 8 may be similar to that of a conventional vehicle brake or transmission clutch. For example, it may be a dry slipping clutch, but a magnetic powder clutch is conceivable, as well. The latter has the advantage that the slipping clutch 8 or the flywheel 6 do not need to be moved with respect to their support.

In the embodiment shown in Fig. 1 and 2 the slipping mechanism 7 comprises a second slipping clutch 12. The second slipping clutch 12 is drivably coupled to the wheel via a second clutch transmission and engageable to the flywheel 6 so as to drive the wheel during a period of slip between the flywheel 6 and the second slipping clutch 12 during a vehicle acceleration when the flywheel 6 rotates. In this case the second slipping clutch 12 is fixed to the primary shaft 1 and the second clutch transmission is formed by the gearbox 3 and the further transmission 5 which is located between the output shaft 4 of the gearbox 3 and the wheel. When the flywheel 6 rotates at high speed as a consequence of a preceding vehicle deceleration, the flywheel 6 and the second slipping clutch 12 can be engaged to each other to accelerate the vehicle, or to support the prime mover to accelerate the vehicle. The advantage of this configuration is that a relatively high power can be supplied via the slipping second slipping clutch 12. If such a power level was to be created by an electric motor, for example, this would result in a driveline having a higher weight and being less compact.

It is noted that it is also possible to use the slipping clutch 8 both for vehicle deceleration (i.e. flywheel acceleration) and vehicle acceleration (i.e. flywheel deceleration). In that case the second slipping clutch 12 could be omitted. This makes the system still compacter. However, the advantage of a separate second slipping clutch 12 is that the speed range of the primary shaft 1 is relatively low (it is related to the speed range of the prime mover) which means that the slip level between the flywheel 6 and the second slipping clutch 12 is relatively high, also in case of switching to another gear ratio in the gearbox 3 during acceleration of the vehicle.

In the embodiment as shown the flywheel 6 is disposed concentrically with respect to the primary shaft 1 and supported by a cylindrical element 13 via bearings 14. The cylindrical element 13 and the primary shaft 1 are rotatable with respect to each other. The cylindrical element 13 is fixed to a housing 15. It is also possible to mount the flywheel 6 rotatably on the primary shaft 1.

The slipping clutch 8 and the second slipping clutch 12 are disposed at opposite sides of the flywheel 6. The flywheel 6, the slipping clutch 8, the second slipping clutch 12 and the clutch transmission 9 are disposed between the prime mover and the gearbox 3 as seen along the primary shaft 1. Thus, the embodiment provides the opportunity to be mounted between the engine and the gearbox 3 in a conventional vehicle, such as a passenger car.

The vehicle further comprises a control member for controlling the slipping mechanism 7 (not shown). The control member may perform a method of controlling the slipping mechanism 7 such that the brake pressure is automatically compensated when the slipping effect between the flywheel 6 and the slipping clutch 8 decreases or drops down so as to balance the vehicle deceleration and avoid extreme changes in braking forces during a vehicle deceleration.

Alternatively, the flywheel can be adapted to operate within an electrical generator (not shown). In that case the slipping clutch 8 accelerates the flywheel, which in this case may be combined with a rotor of a generator, during at least a part of the vehicle deceleration through slip between the flywheel 6 and the slipping clutch 8, whereas the flywheel 6, once having reached the same speed as the slipping clutch 8 may drive the generator. In fact, the wheel may drive the generator via the slipping clutch 8 and the flywheel 6, whereas the slip level between the flywheel 6 and the slipping clutch 8 under these conditions may be low or negligible. The braking action by the generator can be controlled electronically and the generated electrical power can be supplied to a battery, for example for driving an electric motor. When accelerating the vehicle, the electrical energy stored in the battery can be used to drive an electric motor, supported by the kinetic energy stored in the flywheel 6 via slip between the second slipping clutch and the flywheel 6 as described above.

It is noted that an embodiment is conceivable, wherein the slipping clutch 8 is omitted and the flywheel is only engageable to the second slipping clutch 12. In that case, the flywheel 6 can be driven by the vehicle wheel during a deceleration via the further transmission 5, gearbox 3 and primary shaft 1.

In an alternative embodiment the vehicle comprises a prime mover and a flywheel 6, wherein the flywheel 6 forms a rotor of an electric motor (not shown). Thus, when the electric motor is operated it will drive the flywheel 6. Furthermore, an electrical generator is drivably coupled to the wheel and/or the prime mover. Such a generator may be coupled to the engine flywheel, which is for example known from hybrid cars. A control member controls the electrical generator and the electric motor such that electrical power generated by the electrical generator is transmitted to the electric motor associated with the flywheel 6 so as to accelerate the flywheel 6. When the generator is coupled to the wheels of a vehicle the generated power can be directly transmitted to the electric motor driving the flywheel 6, without any slip. In the case of an electrical generator which is coupled to the prime mover the flywheel 6 can also be driven under conditions in which the prime mover does not drive the wheels of the vehicle, such as during idling of an internal combustion engine. The kinetic energy stored in the flywheel may be transmitted to the wheels of the vehicle by slip by means of the second slipping clutch 12. The slipping clutch 8 may be omitted in this embodiment. Of course, the electric motor associated with the flywheel 6 may be adapted such that it is switchable to a generator for generating electrical power during decelerations as described in another embodiment hereinbefore. In the case when the electrical generator which is coupled to the prime mover is switchable to electric motor functioning, the electrical power generated by the flywheel may be transmitted to that motor for accelerating the vehicle, resulting in a slip-free flywheel performance.

It may be clear that several features of the embodiments described can be combined to form alternative embodiments.

From the foregoing, it will be clear that the invention provides a vehicle which is provided with a simple driving system including a flywheel for energy storage.

The invention is not limited to the embodiments shown in the drawings and described hereinbefore, which may be varied in different manners within the scope of the claims and their technical equivalents. For example, the clutch transmission 9 may be integrated with a transmission stage in the gearbox 3. Furthermore, the clutch transmission 9 may comprise a mechanism allowing more than one fixed transmission ratio between the slipping clutch 9 and the further transmission 5, for example a planetary gear train.

## Claims

1. A vehicle comprising
a prime mover for driving at least a wheel of the vehicle,
a flywheel (6) for storage of kinetic energy upon decelerating the vehicle,
a slipping mechanism (7) which is provided with a slipping clutch (8) drivably coupled to the wheel via a clutch transmission (9) and engageable to the flywheel (6), and
a control member for controlling the slipping mechanism (7), **characterized in that**
the slipping mechanism (7) is adapted such that the transmission ratio between the flywheel (6) and the wheel is determined by the extent of slip between the flywheel (6) and the slipping clutch (8) and at least one fixed transmission ratio between the slipping clutch (8) and the wheel.

2. A vehicle according to claim 1, wherein the transmission ratio between the wheel and the slipping clutch (8) is only one fixed transmission ratio.

3. A vehicle according to claim 1 or 2, wherein the flywheel (6) is disposed concentrically with respect to a primary shaft (1) driven by the prime mover and which primary shaft (1) is connected to an input shaft (2) of a gearbox (3) of the vehicle.

4. A vehicle according to claim 3, wherein the clutch transmission (9) comprises a first clutch gear (10) which is fixed to the slipping clutch (8) and which meshes with a second clutch gear (11), wherein the second clutch gear (11) is fixed to a secondary shaft (4) being an output shaft of the gearbox (3) and drivably coupled to the wheel.

5. A vehicle according to claim 3 or 4, wherein the flywheel (6) is rotatably mounted on the primary shaft (1).

6. A vehicle according to one of the preceding claims, wherein the slipping mechanism (7) comprises a second slipping clutch (12) drivably coupled to the wheel via a second clutch transmission (1-5) and engageable to the flywheel (6) so as to drive the wheel during a period of slip between the flywheel (6) and the second slipping clutch (12) during a vehicle acceleration when the flywheel (6) rotates.

7. A vehicle according to claim 6 and one of the claims 3-4, wherein the second slipping clutch (12) is drivably coupled to the primary shaft (1) and the second clutch transmission (12) is formed by the gearbox (3) and a further transmission (5) between the output shaft (4) of the gearbox (3) and the wheel.

8. A vehicle according to claim 7, wherein the slipping clutch (8) and the second slipping clutch (12) are disposed at opposite sides of the flywheel (6), and wherein the flywheel (6), the slipping clutch (8), the second slipping clutch (12) and the clutch transmission (9) are disposed between the prime mover and the gear box (3) as seen along the primary shaft (1).

9. A vehicle according to one of the preceding claims, wherein the slipping clutch (8) and/or the second slipping clutch (12) is a (are) dry slipping clutch(es).

10. A vehicle according to one of the preceding claims, wherein the slipping clutch (8) and/or the second slipping clutch (12) is a (are) magnetic powder clutch(es).

11. A vehicle according to one of the preceding claims, wherein the flywheel (6) forms a rotor of an electrical generator, and wherein a power controller is present for controlling the generator such that the flywheel (6) can be accelerated during a vehicle deceleration at least once the slip between the flywheel and the slipping clutch (8) is negligible.

12. A vehicle comprising
a prime mover for driving at least a wheel of the vehicle,
a flywheel (6) for storage of kinetic energy, wherein the flywheel (6) forms a rotor of an electric motor,
an electrical generator drivably coupled to the wheel and/or the prime mover, and
a control member for controlling the electrical generator and the electric motor such that electrical power generated by the electrical generator is transmitted to the electric motor associated with the flywheel (6) to accelerate the flywheel (6).

13. A vehicle according to claim 12, wherein the electric motor associated with the flywheel is switchable to function as a second generator and the electric generator associated with the wheel and/or the prime mover is switchable to function as a second electric motor so as to be able to drive the second electric motor by electric power from the second generator.

14. A method of controlling a vehicle comprising
a prime mover for driving at least a wheel of the vehicle,
a flywheel (6) for storage of kinetic energy upon decelerating the vehicle,
a slipping mechanism (7) which is provided with a slipping clutch (8) which is drivably coupled to the wheel,
wherein during at least a part of a vehicle deceleration the slipping clutch (8) and the flywheel (6) are engaged to each other such that the wheel is braked by accelerating the flywheel (6) through slip between the slipping clutch (8) and the flywheel (6), whereas the slipping clutch (8) and the flywheel (6) are disengaged at least when the flywheel (6) has reached substantially the same speed as the slipping clutch (8).

15. A method according to claim 14, wherein the slipping mechanism (7) comprises a second slipping clutch (12) drivably coupled to the wheel, and wherein the second slipping clutch (12) and the flywheel (6) are engaged to each other such that the flywheel (6), when rotating, is decelerated through slip between the second slipping clutch (12) and the flywheel (6), hence driving the wheel for vehicle acceleration.

16. A method according to claim 15, wherein the flywheel (6) and the second slipping clutch (12) are disengaged when the second slipping clutch (12) has reached substantially the same speed as the flywheel (6).
